Europäisches Patentamt

European Patent Office

Office européen des brevets

(19)

(11) Publication number: **0 200 975 B1**

# EUROPEAN PATENT SPECIFICATION

(12)

(45) Date of publication of patent specification: **08.01.92**  (51) Int. Cl.⁵: **A01K 13/00**

(21) Application number: **86105451.8**

(22) Date of filing: **19.04.86**

(54) Small animal washing and drying apparatus.

(30) Priority: **27.04.85 JP 63777/85 U**

(43) Date of publication of application:
**12.11.86 Bulletin 86/46**

(45) Publication of the grant of the patent:
**08.01.92 Bulletin 92/02**

(84) Designated Contracting States:
**DE FR GB**

(56) References cited:
**EP-A- 0 111 462**      **FR-A- 2 396 504**
**US-A- 3 884 191**     **US-A- 3 985 102**
**US-A- 4 316 433**     **US-A- 4 407 234**

(73) Proprietor: **IDE, Kunio**
**1-24-9, Konoike-cho**
**Higashi-Osaka City(JP)**

(72) Inventor: **YOSHIKAWA, Kenji**
**546-5, Akeminosato-cho**
**Daito City 574(JP)**

(74) Representative: **Hoffmeister, Helmut, Dr.
Dipl.-Phys.
Patentanwalt Goldstrasse 36
W-4400 Münster(DE)**

Rank Xerox (UK) Business Services

## Description

### 1. FIELD OF THE INVENTION

The present invention relates generally to an apparatus for washing and drying small animals such as pet or laboratory animals. Particularly, it pertains to an apparatus by which the small animals can be washed and dried automatically and hygienically without using human hands.

### 2. DESCRIPTION OF THE RELATED ART

Small animals, such as dogs or cats, are generally washed by using showers or putting the animals into a bath, and brushing by human hands. However, the animals are not accustomed to water whether it is cold or warm, and so they often struggle during the procedure.

Moreover, the coat of said small animals is covered by an aciculum that prevents the penetration of water through the aciculum to the fine soft hair. Therefore, even though the aciculum can be washed by water, the water can not reach and wash the inner fine soft hair. As a result, manual work such as brushing and scrubbing by human hands is required to wash the animals thoroughly.

Therefore, washing is diffucult, and human clothing is soiled. Further, when the small animal is washed in a bathroom, hair fallen out from the animal clogs the drain. After the washing prodecure, the coat of the animal must be rubbed with dry cloth, and in addition sometimes dried by a drier. Therefore, the washing of the small animal is burdensome.

The document FR-A-2 396 504 shows a washing tub having at least one jet water output disposed at an upper part of the inner side walls, and a drain part disposed at the bottom, a footing board installed at a lower part of the tub and vertically adjustable, a movable lid disposed on the opening of the tub, said movable lid having a notch ("du type à guillotine", see page 2) or a similar passage through which the head of an animal is stuck, and a top panel disposed on this passage, said top panel having a notch, or similar, which is opposite to the notch formed to the movable lid in a manner to constitute the opening for the head of the animal.

However, with the apparatus according to FR-A-2 396 504, the animal's body is not soaked in the water, but only showered with the water. Therefore, though the outer aciculum of the animal can be washed, the fine soft hair underlying the aciculum will not be washed without human hands washing. It is necessary to brush or scrub since the showered water does not reach the fine soft hair. Accordingly, brushing or scrubbing by human hands through the openings of the apparatus according to the cited reference is indispensable for sufficiently washing the animal to the inner fine soft hair.

### 3. OBJECT AND SUMMARY OF THE INVENTION

The present invention is intended to obtain a small animal washing and drying apparatus whereby almost all necessary functions for washing small animals are satisfied, and small animal can be washed regardless of their shoulder height and, even if they struggle, washing water is not scattered out of the washing tub.

The apparatus for washing and drying small animal of the present invention comprises,
- a washing tub, an outer case containing said washing tub, a drain port disposed at the bottom part of the washing tub and a filter of said drain port, a footing board installed at a lower part of the washing tub by a level-adjusting member mounting the footing board in a vertically adjustable level, a movable lid disposed on opening of the washing tub, said movable lid having a notch as an opening through which the head of a small animal is stuck, and a top panel disposed on the opening of the washing tub, said top panel having a notch which is opposite to the notch formed to the movable lid in a manner to constitute the opening through which head of the small animal is stuck by combination with the notch of the movable lid, and is characterized by at least one jet water current generator acting during the immersion, allowing to soak the animinal in the water, and by at least one warm air outlet, connected to a heating device which are disposed at un upper part of the inner side wall.

Description of the sub-claims is to be found in the following description of the drawings.

### BRIEF DESCRIPTION OF THE DRAWINGS

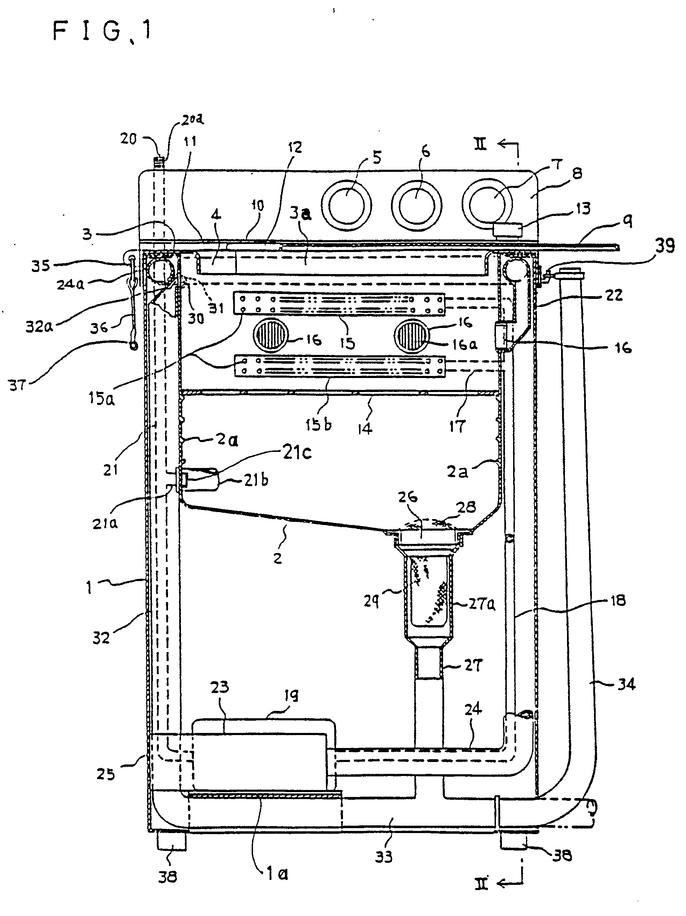

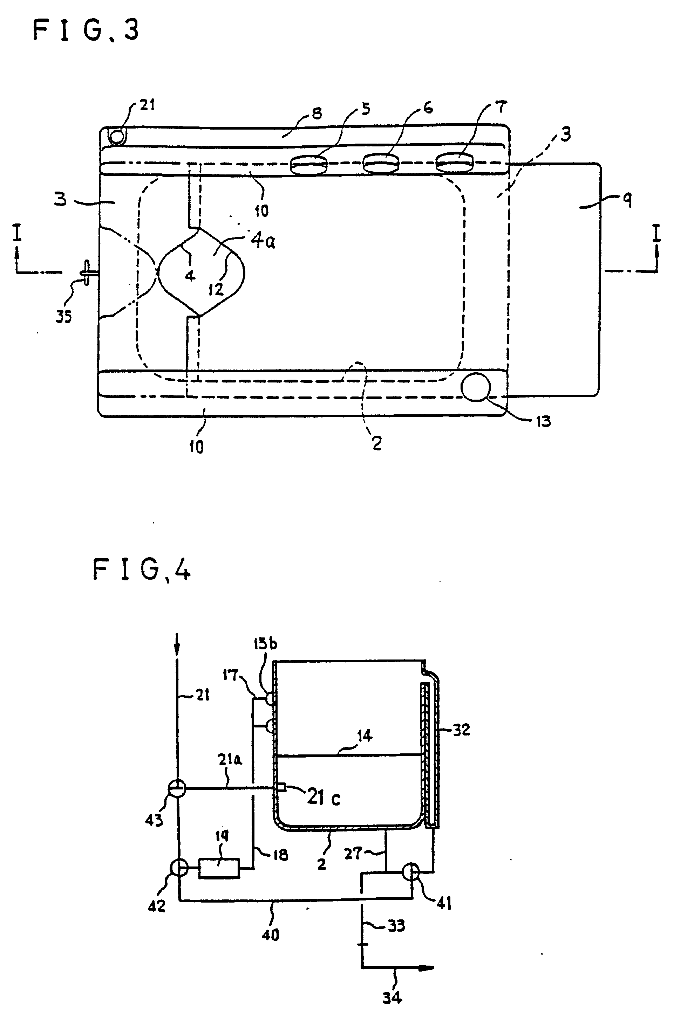

FIG. 1
is a front sectional view showing a small animal washing apparatus as a preferred embodiment of the present invention.
FIG. 2
is a partly sectional view taken on line 2-2 of FIG. 1.
FIG. 3
is a plan view showing the washing apparatus according to FIG. 1.
FIG. 4
is a diagramm of conduits showing the water supply and drainage.
FIGs. 5 (a), (b) and (c)
are schematic diagrams showing phases of operation according to FIG. 4.

FIG. 6
is a perspective view showing an operating state of the washing apparatus.
FIG. 7
is a schematic diagram showing the operation of another embodiment of the present invention.
FIG. 8
is a schematic diagram showing modified means for water supply and drainage.
FIG. 9
is a perspective view showing another embodiment of the present invention.
FIG. 10
is a perspective view showing a modified embodiment wherein the top of said outer case is covered by shield and lid.
FIG. 11
is a sectional view showing a pulsator for generating jet water current in an embodiment of the present invention.

DESCRIPTION OF THE PREFERRED EMBODIMENTS

A first embodiment of the invention is described with reference to Figs. 1-3. In the present invention, a washing tub 2 is installed in an outer case 1, and a footing board 14, e.g. a lattice board, a wire net or punched metal, is disposed at the lower part of the washing tub 2 in such manner that it can be shifted to various level positions in a range from middle to bottom part of the washing tub 2. Plural jet water outlet ports 15a and warm air outlet ports 16 are disposed at the upper part of the inner side of the washing tub 2. The jet water outlet ports 15 are connected to a water supply pressure pump 19, and the warm air outlets 16 are connected to a heating device 23. A drain 26 having a detachable filter is disposed at the bottom part of the washing tub 2. A movable lid 9 for covering the opening of the washing tub 2 is disposed to the upper part of the washing tub 2. A notch 12 is disposed to an end of the movable lid 9. A futher notch 4 is disposed to an end of a top panel 3 located under the movable lid 9, and a head-opening port 4a, through which the head of the small animal is stuck out, is formed by both of the notches 4 and 12.

In case that the small animal, e.g. a dog or a cat is to be washed, the level of the footing board 14 is adjusted according to the shoulder height of the small animal. The level of cold or warm water in the tub 2, if necessary, with cleansing agent, is regulated by letting in water into the washing tub 2. Thereafter, the small animal is put into the washing tub 2, thereby soaking the small animal's body except the head and the neck. The movable lid 9 is put on the opening part of the washing tub 2. At this time, the head of the small animal is stuck out from the head-opening 4a. Spacing between neck of the small animal and the head-opening 4a is rather small. Therefore, even if the small animal is struggling, washing water will not be spilled out of the washing tub 2.

By operating the water supply pressure pump 19, a water jet is made to eject from the jet water current output ports 15. Thus the water in the washing tub 2 is stirred and the water jet will wash the hair of the small animal. A current may be made only by circulating the water in the washing tub 2, or by supplying fresh water continuously without the circulation of water, depending on situation. Waste water in the washing tub 2 is drained through the drain 26, when the washing is finished. But, there is no danger that the drain is clogged by loose hair of the small animal, since a filter is disposed to the drain 26. After draining, the wet coat of the animal may be dried immediately by operating the heating device 23 to supply warm air to the washing tub 2.

The washing tub 2 in the outer case 1 is somewhat smaller than the outer case 1. So there is a gap between the inside of the outer case 1 and the outside of the washing tub 2. The washing tub 2 has a box shape; its upper part is open. The top panel 3 has an opening 3a at the center of it. The size of the opening 3a is a little smaller than the opening of the washing tub 2. Peripheral edges of the opening 3a protrudes toward the center of the opening of the washing tub 2. A notch 4 is provided at a center part of a perpendicular side edge of the top panel 3. The edges of the opening 3a of the top panel 3 are bent inwardly and have a lower position than the opening of the washing tub 2.

Washing switch 5, water supply switch 6 and drying switch 7 are disposed on an operating panel 8 formed at upper and rear part of the outer case 1. These switches start or stop the respective devices connected with them. The lid 9 is a flat board and mounted detachable or slidable in left and right direction along with guide grooves 11. The guide grooves 11 are formed between the top panel 3 and a guide 10 at front lower edge of the operation panel 8, and between said guide 10 attached to a front part of the outer case 1 and upper surface of top panel 3. A notch 12 is disposed at an edge of the movable lid 9 opposite to the notch 4 of the top panel 3. For to face the notches 4 and 12 each other, head-opening 4a is formed, and all other opening parts of the washing tub 2 are closed. The size of the head-opening 4a can be changed by sliding the movable lid 9 along the guide grooves 11.

The movable lid 9 is connected with the front guide 10 by a lock nut 13, and the lower end of the lock nut 13 presses the top surface of the movable lid 9 to prevent sliding out of it.

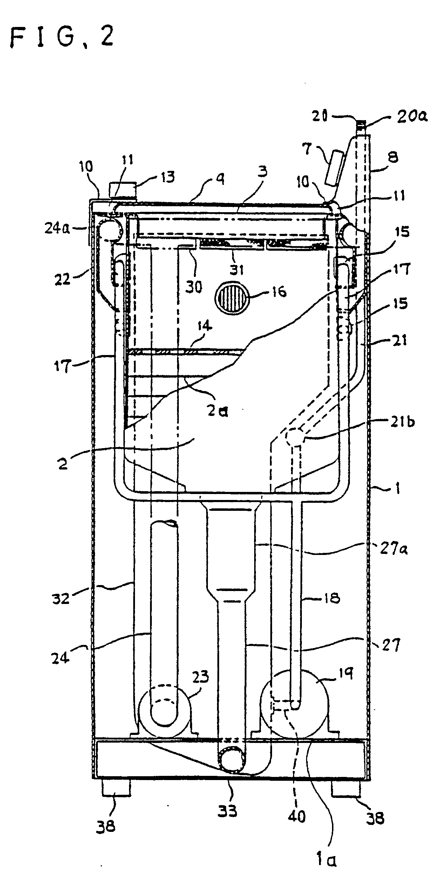

The footing board, e.g., for example a lattice board 14, is disposed in the washing tub 2, and each side of the lattice board is slightly smaller than those of the cross section in the horizontal direction of the washing tub 2. Both sizes are not quite different, so that substantially there is no gap between the footing board 14 and the wall of the washing tub 2. The footing board 14 is installed in the washing tub 2 in such manner that it it is possible to shift it to plural positions in a range from a middle part to the bottom part of the washing tub 2. A lot of protuberances are formed in avertical row on the side wall of the washing tub 2 as footing board stoppers (Four steps of stoppers 2a are shown in FIG. 2).

A pair of upper and lower jet water current outlets 15 is disposed on the front and the rear wall of the washing tub 2, and it is positioned above of the middle of the washing tub 2. The jet water current output ports 15 are formed by jet holes 15a arranged on a vertical wall of a pipe 15b having a D-shaped sectional figure. The jet holes 15a are arranged in an upper and a lower line. Tthe above-mentioned vertical wall is in one plane with the side wall of the washing tub 2.

Warm air outlets 16 are disposed between the upper and the lower jet water current output port 15. Front and rear walls for the washing tub 2 have respectively two warm air outlets on their right and left parts, and right and left walls of the washing tub have respectively one single warm air outlet on their center part. The warm air outlet 16 has many vertical fins 16a at the opening to control the flowing direction of the warm air.

The jet water current output pipe 15b is connected to a pressurized water supply pipe 17. Further, the water supply pipe 17 is connected to a main water supply pipe 18 which is connected to a water supply pressure pump 19 provided on a stand (1a).

The suction port of the water supply pressure pump 19 is connected to a water supply pipe 21, and the other end of the water supply pipe 21 is connected to a water inlet 20, connected by a screw 20a.

The water supplying port 21c has a filter 21b through which water is supplied to the washing tub 2 and is installed at a lower position than the footing board stopper 2a. A branch water supply pipe 21a is provided at a midway part of the water supply pipe 21 to connect it to the water supplying port 21b.

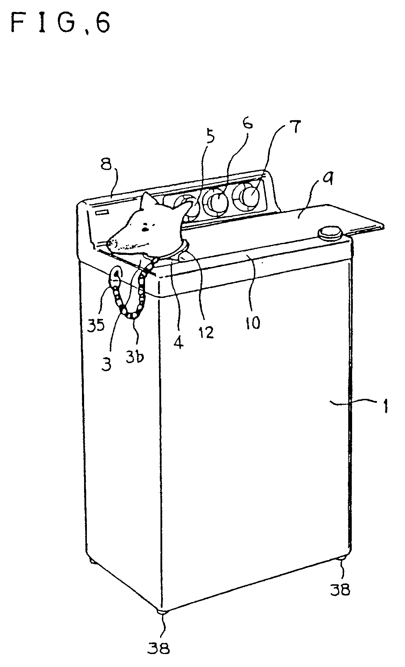

The warm air outlets 16 are connected to air supply pipes 22. Each supply pipe 22 is connected with a main air supply pipe 24 through a distributing pipe 24a. The main air supply pipe 24 is connected with the heating device 23 installed on stand. The heating device 23 has an electric heater and a fan (not shown in FIG. 1 - 10), and heats air from the outside sucked through an outer air intake 25 disposed in the outer case 1. The heated air is to be sphouted into the washing tub 2 through the main air supply pipe 24 and the air supply pipe 22. Further, it is possible and convenient that a heater of the heating device 23 is turned off or on by wellknown means independently from the spouting, so that warm or cool air can be supplied depending on necessity.,

A drain port 26 is disposed at the bottom of the washing tub 2 and connected with a drain pipe 27. A rough filter 28 is detachable disposed on the drain port 26. A zylindrical fine filter 29 is inserted to a filter holder 27a disposed at the connection part of the drain port 26 and the drain pipe 27. Hair fallen out from the animal is filtrated by the filters, and the drain pipe will not be clogged.

Three rectangular upper drain ports 30 are disposed in horizontal line at the upper part of left side wall of the washing tub 2. A filter 31, which is detachably inserted to the each upper drain port 30, is connected to an upper opening 32a of a drain tank 32, which is installed in the space between the outer case 1 and the washing tub 2 and has nearly the same size as this space so that the soiled water can be drained rapidly. The lower part of the drain tank 32 is connected with the main drain pipe 33, and the above-mentioned drain pipe 27 is connected with the middle part of the main drain pipe 33. The other end of the main drain pipe 33 is connected with a flexible drain hose 34.

A ring 35 for fixing the collar of the small animal is provided at the left side wall of the outer case 1, where there is the head-opening 4 a. Means for connecting such as a chain, a rupe, a coil or a spring which have a hanger 37 at the outer end are connected to the ring 35. A motion of head of small animal is restrained by connecting the hanger 37 to the collar of small animal.

Four corners of the bottomside of the outer case 1 are provided with rubber legs 38. At the right side wall of the outer case 1 a hose hanger 39 is installed.

A further embodiment of the present invention is described with reference to FIG. 4. One end of the water circulation pipe 40 is connected to the main drain pipe 33 by a valve 41 at a position of upper stream to a connection part of the main drain pipe 33 and the drain pipe 27. The other end of the water circulation pipe 40 is connected by a three-way valve 42 to a water supply pipe 21 at a position between a connection part 43 of the water supply pipe 21 and a branch water supply pipe 21a and a water supply pressure pump 19. Cross valves are provided at respective connection parts of the water circulation pipe 40 and the main drain pipe 33, and the water circulation pipe 40 and the water supply pipe 21. Another cross valve is provided at a connection part of the water supply pipe 21 and the branch water supply pipe 21. The above-mentioned valves may be of manual operation type. Furthermore, it is possible and more convenient to use magnetic valves linked with the switches 5, 6 and 7 in a manner to be controlled thereby.

In the following, operation of the abovementioned construction is explained with reference to FIGs. 1 to 6.

A drain hose 34 is hung to drain hose hanger 39,, and a connector 20a of the water inlet 20 is connected with a faucet. At this time the above-mentioned valves 41, 42 and 43 are respectively set up in the states of FIG. 4. That is, the water supply pipe 21 is connected with the branch water supply pipe 21a, and further a drain tank 32 is connected with the circulation pipe 40 which is connected with the water supply pressure pump 19.

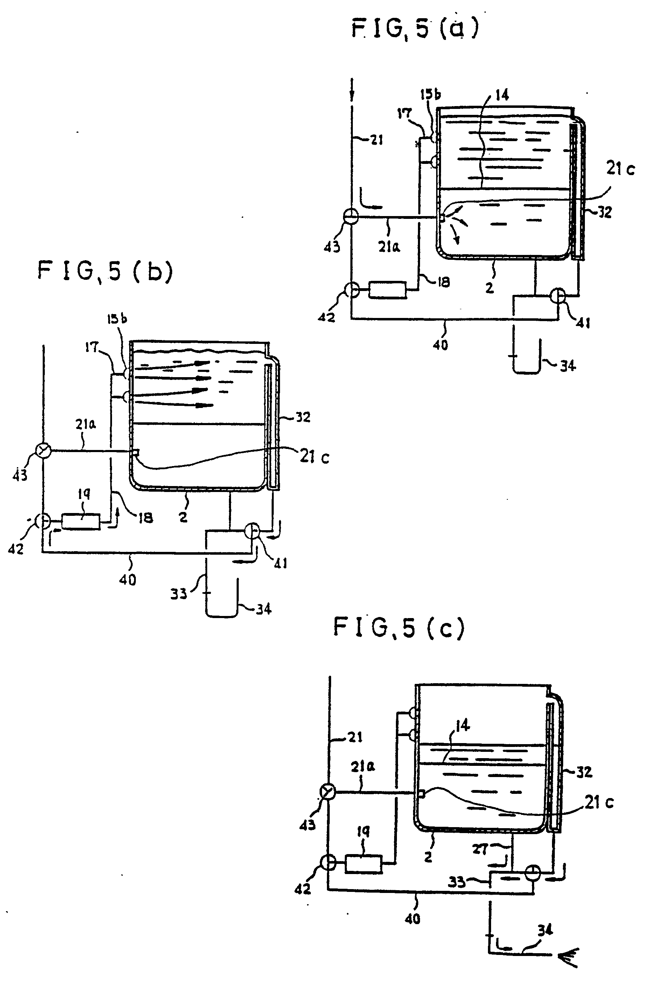

Under the above-mentioned state, water is supplied to the washing tub 2 from the faucet, through the water supply pump 19, the valve 43 and the branch water supply pump 21, valve 43 and the branch water supply pipe 21a by pushing the water supply switch 6. In this case, water is filled not only in the washing tub 2, but also in the drain tank (FIG. 5A). It is desirable that the water level is kept at nearly upper edge of the upper drain port 30.

Having finished the water supplying, a small animal is put in the washing tub 2 with its head sticking up through the notch 4 of top panel 3. By sliding the movable lid 9, size of the head opening 4a formed by notches 4 and 12 of the top panel 3 and movable lid 9 is adjusted corresponding to the neck size of the small animal. The movable lid 9 can be fixed by screwing the lock nut 13.

The valve 43 is closed by turning off the water supply switch 6. Thereby, a connection between the water supply pipe 21 and the branch water supply pipe 21a is cut. Consequently, water supply is cut off. By turning on the washing switch 5, the water supply pump 19 is operated and pressurized water is supplied to the jet water current output pipe 15b through the main water supply pipe 18 and pressurized water supply pipe 17. Thus, jet water current is supplied to the washing tub 2 through the jet water current output port 15a. The water in the washing tub 2 is slirred and mixed with cleansing agent. The washing water reaches aciculum and the fine soft hair underlying the aciculum and skin is thereby washed, too. The washing water is circulated by the water supply pressure pump 19 through a circulation passage from the main water supply pipe 18, through the pressurized water supply pipe 17, the jet water current output pipe 15b, the jet water current output port 15a, the washing tub 2, the drain tank 32, the main drain pipe 33 and the valve 41 to the water circulation pipe 40 (FIG. 5B).

After finishing the washing of the small animal, the operation of the water supply pressure pump 19 is stopped by turning off the washing switch 5. The drain tank 32 is connected with the main drain pipe 33 by switching the valve 41. A drain hose 34 is taken off from the drain hose hanger 39. Waste water in the washing tub 2 and the drain tank is drained from the drain hose 34 through the drain pipe 27 and main drain pipe 33 (FIG. 5C). Fallen out hair or the like in the waste water is filtrated by a two step filter comprising a rough filter 28 and a fine filter 29. Thereby the waste water can be smoothly drained without clogging the drainage or sewage.

When the draining of the water is finished, the drain hose 34 is hanged again to the drain hose hanger 39, as shown in FIG. 5a and the water supply switch 6 is switched to connect the water supply pipe 21 and the branch water supply pipe 21a, and further to connect the drain tank 32 and the circulation water pipe 40. Thereafter, water is supplied again from the water supplying pipe 21 to the washing tub 2, and further the drain tank 32 is filled up again with water. Next, by turning on the washing switch 5, as shown in FIG. 5B the water supply pressure pump 9 is operated. Thereby, the jet water current is spouted to the washing tub 2 in the same manner as mentioned above, and water in the washing tub 2 is circulated and stirred. Therefore, cleansing agent, bubble and filth which are on the hair of the small animal are washed away. The above-mentioned rinse is preferably repeated several times depending on siluation in the same way as mentioned above. And futhermore, rinse agent may be added in the middle of the above-mentioned rising.

After the rinse and the drainage of water in the washing tub 2 and the drain tank 32 are finished, the heating device 23 is operated by turning on the drying switch 7. Warm air heated by the heater is supplied from respective warm air outlets 17 to the washing tub 2 through the main air supply pipe 24, the distribution pipe 24a and the air pipe 22 and dries the wet hair of the small animal.

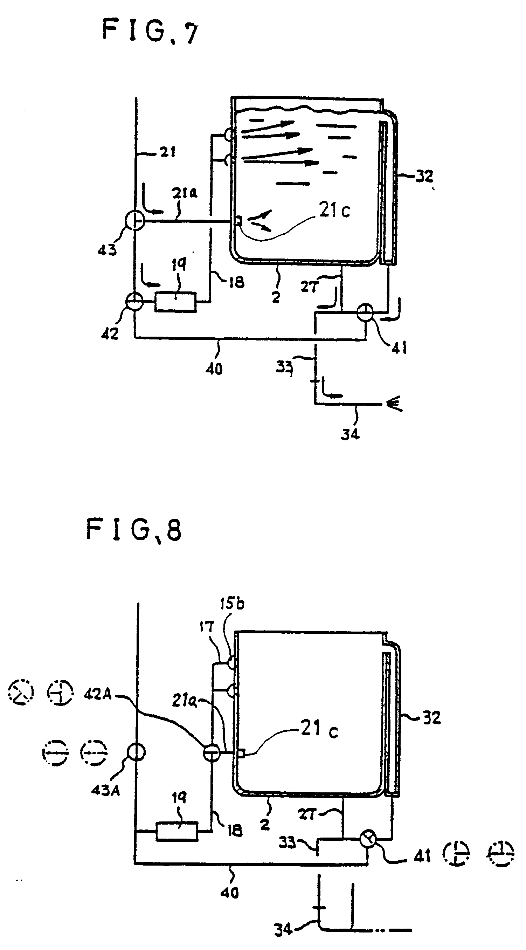

In the above-mentioned embodiment, a continuous rinsing by fresh water happens as following: By changing the valves 43, 42 and 41, as shown in FIG. 7, connections of the water supply pipe 21 and the branch water supply pipe 21a, the water circulation pipe 40 and the water supplying pressure pump 19, and of the drain tank 32 and the water circulation pipe 40 are cut off. On the other hand, the water supplying pipe 21, the water supply pressure pump 19, the drain tank 32 and the main drain pipe 33 are respectively connected. The drain hose 34 is put off from the drain hose hanger 39 to prepare the draining of the water. Thereafter, the water supply pressure pump 19 is cleaned.

Various kinds of materials, such as wood, plastic, metal or the like can be used for the footing board. If the shape of the footing board guarantees the water passing downwards therethrough, any board such as lattice board, punching board, slatted board can be used for the footing board. Moreover, even wire netting or the like can be used. For material of the main body of the apparatus, metal, plastic and enamelled material or the like can be used.

FIG. 8 shows another embodiment of the concrete constitution of water supply and drainage system. The construction of the FIG. 8 is different from the constitution of FIG. 4 where the branch water supplying pipe 21a is divided from the main water supply pipe 18. Further a stop valve 43a is provided in the water supply pipe 21, and a cross valve 42a is provided at a connection part of the branch water supply pipe 21a and the main water supply pipe 18. The water circulation pipe 40 is directly connected to the water supply pressure pump 19 at the part downstream of the valve 43A.

In FIG. 8, solid lines show the states of the values of water supplying stage, and drain lines show the washing or rinse stage. And further, the drain line shows the raining water stage.

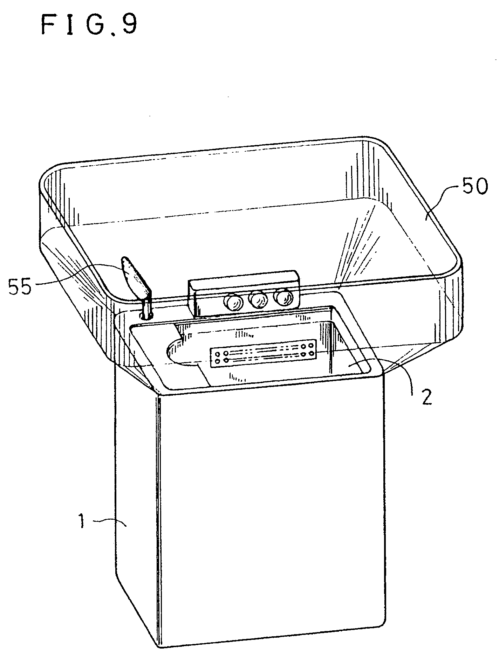

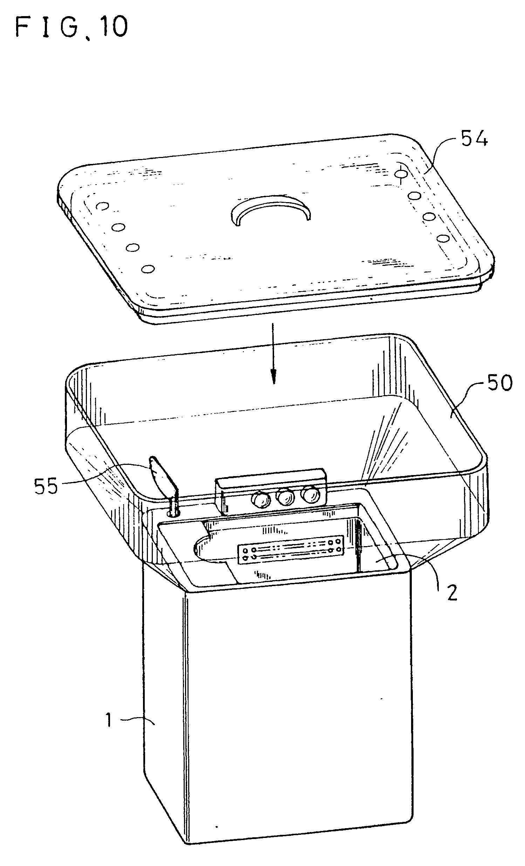

FIG. 9 shows another embodiment of the present invention. In this embodiment, outer shield 50 made of plastic is disposed to the upper part of outer case 1 in a manner to enclose the top part of the outer case 1. The outer shield 50 receives scattered drops of washing water, cleansing agent and hair during the washing of the small animal, and flows them back to the washing tub 2. Therefore, washing water or the like are not scattered out of the apparatus. The outer shield 50 may be covered by outer lid 54 (see FIG. 10). For the outer shield 50, various kind of materials such as plastic, metal or wood can be used.

Additionally, a showering device 55 for shampooing the head of the small animal may be provided in the shield 50.

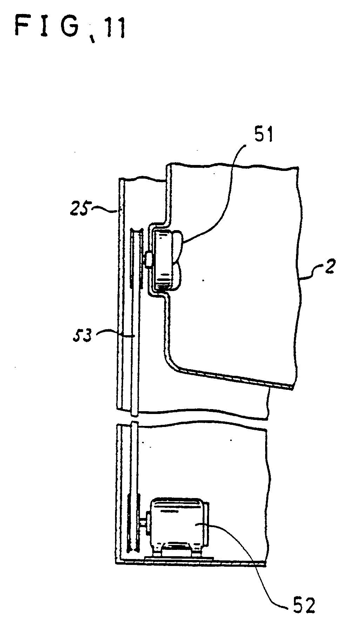

FIG. 11 shows a jet water current generation device, where a pulsator 51 is driven by an electric motor 52 through belts 53. It is preferable that one pulsator 51 is disposed on the left side wall of the washing tub 2 (the side having the head opening 4a), and one pulsator is disposed in the front and rear wall of the washing tub 2, and one or two pulsators are disposed on the right side wall of the washing tub 2.

As mentioned above, in the small animal washing apparatus of the present invention, the small animal is washed and dried automatically in the washing tub 2.

Especially, in the present invention, the small animal's body is soaked in the water, and not only aciculum but also fine soft hair can be directly washed and rinsed by the jet water current, and therefore, effects of washing and rinsing of the present invention are more excellent than the conventinal arts wherein animals are washed and rinsed by showered water.

Therefore, washing of the small animal does not make trouble, and human clothing and bathroom or the like are not soiled. Further, fallen out hair is not dispersed around the room, and not discharged together with soiled water since they are filtrated by the filter 29 disposed at the drain port 26. Moreover, the apparatus is usable for washing and drying various small animals that are different in their height, since the level or height of the footing board 14 can be adjusted depending on the height of the small animal.

## Claims

1. Small animal washing and drying apparatus, said apparatus comprising:
   a washing tub (2), an outer case (1) containing said washing tub, a drain port (26) disposed at the bottom part of the washing tub and a filter (28) of said drain port (26), a footing board (14) installed at at lower part of the washing tub by a level-adjusting member mounting the footing board in a vertically adjustable level, a movable lid (9) disposed on the opening of the washing tub, said movable lid having a notch as an opening through which the head of a small animal is stuck, and a top panel (3) disposed on the opening of the washing tub, said top panel having a notch (4) which is opposite to the notch (12) formed to the movable lid in a manner to constitute the opening through which the head of the small animal is stuck by combination with the notch of the movable lid,
   characterized by at least one jet water current generator (15 + 19) acting during the immersion, allowing to soak the animal in the water, and by at least one warm air outlet (16), connected to a heating device (23) which are disposed at an upper part of the inner side wall.

2. Small animal washing apparatus in accordance with claim 1, wherein said water current generator comprises at least one jet water output port (15) connected with a water supply pressure pump (19).

3. Small animal washing apparatus in accordance with claim 1, wherein said jet water current generator comprises at least one pulsator (51) driven by an electric motor (52).

4. Small animal washing apparatus in accordance with claim 1, wherein said movable lid (9) is detachably inserted to guide grooves (11) formed to two opposite ends of said top panel (3), and said both opposite ends are perpendicular to an end on which said notch (4) is disposed, and in a manner that said movable lid (9) can be slided and fixed by a fixing device.

5. Small animal washing apparatus in accordance with claim 4, wherein said filter comprises a rough filter (28) detachably disposed to said drain (26), and a fine filter (31) inserted extending from said drain ( 26) to a connection part between said drain (26) and a drain pipe (27).

6. Small animal washing apparatus in accordance with claim 5, further comprising a fastener for fastening the collar of small animals disposed to said outer case (1).

7. Small animal washing apparatus in accordance with claim 6, wherein said fixing means comprises a lug disposed at the side wall of said outer case (1), at a side where the notch (4) of said top panel (3) being formed, a hanger (37) by which said collar of small animals is fixed, a connecting rod for connecting said hanger (37) to said lug.

8. Small animal washing apparatus in accordance with claim 1, further comprising:
a water supplying port provided at the lower part of said washing tub (2), and connected to the water supply pipe (18), the free end of which extrudes out of said outer box.

9. Small animal washing apparatus in accordance with claim 1, further comprising:
an outer fence mounted on the top of said outer case (1) in a manner to encircle the opening of the outer box.

10. Small animal washing apparatus in accordance with claim 1, further comprising
an outer fence mounted on the top of said outer case (1) and an outer lid (54) to be put on the top opening of said outer fence for covering said top opening.

**Revendications**

1. Appareil destiné au lavage et au séchage de petits animaux comprenant :
un baquet de lavage (2), une enveloppe extérieure (1) contenant le baquet de lavage, un orifice d'écoulement (26) disposé sur la partie inférieure du baquet de lavage et un filtre (28) de l'orifice d'écoulement (26), une assise de pattes (14) installée sur une partie inférieure du baquet de lavage par un élément ajustant verticalement la hauteur de l'assise de pattes, un couvercle mobile (9) disposé sur l'ouverture du baquet de lavage, le couvercle mobile comportant une encoche formant une ouverture à travers laquelle passe la tête de l'animal, et un panneau supérieur (3) disposé sur l'ouverture du baquet, ce panneau supérieur ayant une encoche (4) en regard de l'encoche (12) formée sur le couvercle mobile de façon à constituer l'ouverture à travers laquelle passe la tête de l'animal en combinaison avec l'encoche du couvercle mobile,
caractérisé par au moins un générateur de courant de jet d'eau (15 + 19) agissant pendant l'immersion, permettant de tremper complètement l'animal et au moins un orifice de sortie d'air chaud (16à) raccordé à un dispositif de chauffage (23) disposé sur une partie supérieure de la paroi latérale intérieure.

2. Appareil de lavage pour petits animaux selon la revendication 1, dans lequel le générateur de courant d'eau comprend au moins un orifice de sortie de jet d'eau 15 raccordé à une pompe de pression d'alimentation d'eau (19).

3. Appareil de lavage pour petits animaux selon la revendication 1, dans lequel le générateur de courant de jet d'eau comprend au moins un pulsateur (51) entraîné par un moteur électrique (52).

4. Appareil de lavage pour petits animaux selon la revendication 1, dans lequel le couvercle mobile 9 est introduit de façon amovible sur des rainures de guidage (11) formées sur les deux extrémités opposées du panneau supérieur 3, et les deux extrémités opposées sont perpendiculaire à une extrémité sur laquelle est disposée l'encoche (4), et de manière que le couvercle mobile (9) puisse coulisser et être arrêté en position par un dispositif de fixation.

5. Appareil de lavage pour petits animaux selon la revendication 4, dans lequel le filtre comprend un filtre grossier (28) disposé de façon amovible sur l'écoulement (26) et un filtre fin (31) monté à demeure s'étendant à partir de l'écoulement (26) vers une partie de raccordement entre l'écoulement (26) et une conduite d'écoulement (27).

6.  Appareil de lavage pour petits animaux selon la revendication 5 comprenant de plus un dispositif de fixation servant à fixer le collier des animaux disposé sur l'enveloppe extérieure (1).

7.  Appareil de lavage pour petits animaux selon la revendication 6, dans lequel le moyen de fixation comprend une protubérance disposée sur la paroi latérale de l'enveloppe extérieure (1), sur un côté où est formée l'encoche (4) du panneau supérieur (3), un dispositif d'accrochage (37) sur lequel est fixé le collier des animaux, une tige de raccordement reliant le dispositif d'accrochage (37) à la protubérance.

8.  Appareil de lavage pour petits animaux selon la revendication 1, comprenant de plus :
    un orifice d'alimentation d'eau prévu sur la partie inférieure du baquet de lavage (2) et raccordé à la conduite d'alimentation d'eau (18), dont l'extrémité libre fait saillie en dehors du caisson extérieur.

9.  Appareil de lavage pour petits animaux selon la revendication 1, comprenant de plus :
    une enceinte extérieure montée sur le dessus de l'enveloppe extérieure (1) de façon à encercler l'ouverture du caisson extérieur

10. Appareil de lavage pour petits animaux selon la revendication 1, comprenant de plus :
    une enceinte extérieure montée sur le dessus de l'enveloppe extérieure (1) et un couvercle extérieur (54) à poser sur l'ouverture de dessus de l'enceinte extérieure pour recouvrir l'ouverture supérieure.

## Patentansprüche

1.  Gerät zum Waschen und Trocknen von Kleintieren, bestehend aus:
    einem Waschtrog (2), einem äußeren Gehäuse, in dem der Waschtrog untergebracht ist, einem Abfluß (26) im Bodenteil des Waschtrogs und einem Filter (28) für den Abfluß (26), einem Fußbord (14), das im unteren Teil des Waschtrogs über ein höhenverstellbaren Element zur Fixierung des Fußbords in einer einstellbaren Höhe befestigt ist, einem beweglichen Deckel (9), der an der Öffnung des Waschtrogs angeordnet ist, wobei dieser Deckel einen Ausschnitt aufweist, durch das der Kopf des kleinen Tieres gesteckt wird, und einer Deckplatte (3) auf der Öffnung des Waschtroges, die einen Ausschnitt (4) aufweist, der der Öffnung (12) in dem beweglichen Deckel gegenüberliegt, so daß eine Öffnung gebildet wird, durch die der Kopf des Kleintieres gesteckt wird in Kombination mit dem Ausschnitt im dem beweglichen Deckel gebildet wird, gekennzeichnet durch wenigstens einen Generator (15 + 19), der Strömung durch einen Wasserstrahl erzeugt,der während des Untertauchens arbeitet, damit das Tier im Wasser eingeweicht wird, und durch wenigstens einem Warmluftauslaß (16), der mit einer Aufheizung (23) verbunden ist, die sich am oberen Teil der inneren Stirnwand befindet.

2.  Gerät zum Waschen von Kleintieren nach Anspruch 1, gekennzeichnet durch einen Generator, der Strömung durch einen Wasserstrahl erzeugt, der wenigstens eine Wasserausstoßdüse (15) besitzt, die mit einer Druckpumpe (19) für die Wasserzufuhr ausgestattet ist.

3.  Gerät zum Waschen von Kleintieren nach Anspruch 1, gekennzeichnet durch einen Generator, der Strömung durch einen Wasserstrahl erzeugt, der wenigstens einen Pulsator (51) besitzt, der durch einen elektrischen Motor angetrieben wird.

4.  Gerät zum Waschen von Kleintieren nach Anspruch 1, dadurch gekennzeichnet, daß der bewegliche Deckel (9) abnehmbar in zwei Führungsnuten (12), die an den gegenüberliegenden Seiten der Deckplatte (3) liegen, angebracht ist, und daß beiden gegenüberliegenden Seiten senkrecht zu einem Ende liegen, an dem sich der erwähnte Ausschnitt (4) befindet, wobei der bewegliche Deckel (9) verschiebbar und durch eine Feststellvorrichtung fixierbar ist.

5.  Gerät zum Waschen von Kleintieren nach Anspruch 4, dadurch gekennzeichnet, daß der Filter einen Grobfilter (4) umfaßt, der abnehmbar auf dem Abfluß (26) angebracht ist, und einen Feinfilter (31), der so angebracht ist, daß er von dem Abfluß (26) bis zu einem Verbindungsstück zwischen dem Abfluß (26) und einem Abflußrohr (27) reicht.

6.  Gerät zum Waschen von Kleintieren nach Anspruch 5, gekennzeichnet durch eine Befestigungsvorrichtung zum Befestigen des Halsbandes des kleinen Tieres an dem äußeren Gehäuse (1).

7.  Gerät zum Waschen von Kleintieren nach Anspruch 6, dadurch gekennzeichnet, daß die Befestigungsvorrichtung eine Nase umfaßt, die sich an der Seitenwand des äußeren Gehäuses (1) befindet, und zwar auf der Seite, wo der Ausschnitt (4) der Deckplatte (3) ausgebildet ist, und einen Haken (37), an dem des Halsband des Kleintieres befestigt wird, sowie eine Verbindung, die den Haken (37) mit der Nase verbindet.

8. Gerät zum Waschen von Kleintieren nach Anspruch 1, gekennzeichnet durch einen Anschluß für die Wasserzufuhr im unteren Teil des Waschtroges (2), der mit dem Wasserzuflußrohr (18) verbunden ist, und dessen freies Ende aus dem äußeren Gehäuse herausragt.

9. Gerät zum Waschen von Kleintieren nach Anspruch 1, gekennzeichnet durch eine äußere Reling oben auf dem äußeren Gehäuse (1), die die Öffnung des äußeren Gehäuses umgibt.

10. Gerät zum Waschen von Kleintieren nach Anspruch 1, gekennzeichnet durch eine äußere Reling oben auf dem äußeren Gehäuse (1), und einen äußeren Deckel (54), mit dem die Öffnung der äußeren Reling abdeckbar ist.

# F I G . 1

# F I G. 2

FIG.3

FIG.4

FIG. 5(a)

FIG. 5(b)

FIG. 5(c)

F I G , 6

## F I G. 7

## F I G. 8

FIG.9

FIG.10

# F I G ⸜ 11